# EUROPÄISCHE PATENTSCHRIFT

(11) **EP 1 503 850 B1**
(45) Veröffentlichungstag und Bekanntmachung des Hinweises auf die Patenterteilung: **24.08.2005**
(21) Anmeldenummer: 03722598.4
(22) Anmeldetag: 06.05.2003
(51) Int. Cl.: B01F 3/04

(54) **RÜHR- UND BEGASUNGSVORRICHTUNG FÜR BELEBTSCHLÄMME**
STIRRING AND AERATING DEVICE FOR ACTIVATED SLUDGES
DISPOSITIF D'AGITATION ET D'AERATION POUR BOUES ACTIVEES

(30) Priorität: 10.05.2002 DE 20207376 U
(43) Veröffentlichungstag der Anmeldung: 09.02.2005
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2003/004730
(87) Internationale Veröffentlichungsnummer: WO 2003/095081

(56) Entgegenhaltungen:
- EP-B- 0 562 314
- DE-A- 19 826 098
- US-A- 4 210 534

## Beschreibung

Die Erfindung betrifft eine Rühr- und Begasungsvorrichtung für Belebtschlämme nach dem Oberbegriff des Anspruchs 1.

Eine solche Rühr- und Begasungsvorrichtung ist aus der DE 198 26 098 C2 bekannt. Zur Versorgung der Begasungseinrichtung weist die bekannte Vorrichtung eine an einem turmartigen Gestell angebrachte gesonderte Luftzuführleitung auf. Die Luftzuführleitung bildet einen Widerstand im strömenden Belebtschlamm. Das kann zu Vibrationen und dadurch bedingt zum Lösen von die Luftzuführleitung haltenden Befestigungselementen führen. Eine Reparatur solcher abgerissener Befestigungselemente ist äußerst aufwändig. Es kann dazu erforderlich sein, die gesamte Rühr- und Begasungsvorrichtung aus dem Klärbecken herauszuhieven.

Aus der DE 42 18 027 ist eine weitere Rühr- und Begasungsvorrichtung bekannt. Dabei ist eine Begasungseinrichtung in einer Ebene unterhalb des Rührelements vorgesehen. Die Begasungseinrichtung ist über einen Schlauch mit einer Druckluftquelle verbunden. In der Praxis hat sich die Verbindung zwischen dem Schlauch und Begasungseinrichtung als nicht besonders haltbar erwiesen.

Aus der DE 298 16 516 U1 ist eine Vorrichtung zur Belüftung von Grundwasser bekannt. Dabei ist eine an einen Oxidationsbehälter angeschlossene Lufteintragseinrichtung aus einem perforierten Rohrträgerverbund hergestellt, der mittels eines Membranschlauchs überzogen ist. Der Membranschlauch ist mit schlitzförmigen Poren versehen.

Die US 4,431,597 beschreibt eine Mischvorrichtung für Flüssigkeiten. Dabei kann in der Nähe eines Propellers eine mit einer separaten Gasleitung verbundene Düse vorgesehen sein. Durch die Düse wird beim Betrieb des Propellers nach dem Venturi-Prinzip Gas in die Flüssigkeit eingetragen.

Aufgabe der Erfindung ist es, die Nachteile nach dem Stand der Technik zu beseitigen. Es soll insbesondere eine Rühr- und Begasungsvorrichtung angegeben werden, die einfach und kompakt aufgebaut und insbesondere reparaturunanfällig ist. Nach einem weiteren Ziel der Erfindung soll die Rühr- und Begasungsvorrichtung möglichst kostengünstig herstellbar und einfach und schnell zu montieren sein.

Diese Aufgabe wird durch die Merkmale des Anspruchs 1 gelöst. Zweckmäßige Ausgestaltungen ergeben sich aus den Merkmalen der Ansprüche 2 bis 11.

Nach Maßgabe der Erfindung ist vorgesehen, dass die Luftzuführung durch einen in mindestens einem der Stützelemente in Längsrichtung sich erstreckenden leitungsartigen Durchgang erfolgt. - Das Vorsehen eines solchen leitungsartigen Durchgangs innerhalb der Stützelemente trägt zu einem besonders kompakten Aufbau der Rühr- und Begasungsvorrichtung bei. Der Durchgang verläuft parallel zur Längsrichtung bzw. Längserstreckung innerhalb des Stützelements. Es ist nicht mehr erforderlich, eine gesonderte Luftzuführleitung außen am turmartigen Gestell mittels Halteelementen zu befestigen. Die Luftzuführleitung kann in das Stützelement integriert oder durch das Stützelement selbst gebildet sein. Das spart Kosten. Es kann nicht mehr zum Abreißen von Halteelementen kommen. Die vorgeschlagene Rühr- und Begasungsvorrichtung ist in dieser Hinsicht besonders reparaturunanfällig.

Vorteilhafterweise weist das Trägerelement einen mit dem Durchgang verbundenen Luftsammelkanal auf. Der Luftsammelkanal ist zweckmäßigerweise ringförmig ausgebildet. Er weist vorteilhafterweise einen Stutzen auf. Der Luftsammelkanal kann über diesen Stutzen mit einer Druckluftquelle verbunden sein.

Nach einem weiteren Ausgestaltungsmerkmal ist die Begasungseinrichtung an bzw. nahe bei einem unteren, d.h. dem entfernt vom Luftsammelkanal befindlichen, Ende des Stützelements mit dem Durchgang verbunden. Die Luftzuführung erstreckt sich somit nahezu über die gesamte Höhe der Vorrichtung vom Luftsammelkanal bis in die Nähe des bodenseitigen unteren Endes des Stützelements.

Nach einer besonders vorteilhaften Ausgestaltung weisen sämtliche Stützelemente in Längsrichtung einen leitungsartigen Durchgang auf und die Luftzuführung erfolgt durch sämtliche Durchgänge. In diesem Fall sind vorteilhafterweise die Durchgänge sämtlicher Stützelemente mit dem Luftsammelkanal verbunden.

Nach einem weiteren Ausgestaltungsmerkmal ist die Begasungseinrichtung eine, vorzugsweise mit sämtlichen Durchgängen verbundene, mit Begasungsöffnungen versehene Ringleitung. Die Ringleitung ist zweckmäßigerweise von den Stützelementen umgeben. Damit kann besonders effektiv das Rührelement von unten her begast werden.

Nach einer weiteren Ausgestaltung können die Stützelemente an ihrem unteren Ende mit einem Fuß verbunden sein. Die Begasungseinrichtung kann Bestandteil des Fußes sein und die Durchgänge können mit im Fuß vorgesehenen jeweils mindestens eine Begasungsöffnung aufweisenden Begasungsleitungen verbunden sein. Bei der mindestens einen Begasungsöffnung kann es sich um einen auf die der Antriebsvorrichtung abgewandte Unterseite des Rührelements gerichteten Rohrstutzen handeln.

Nach einer weiteren Ausgestaltung kann der Fuß ein zentral angeordnetes Fanglager für ein von der Unterseite des Rührelements hervorstehendes Ende der Welle aufweisen. Zweckmäßigerweise ist der Fuß aus vom unteren Ende der Stützelemente sich erstreckenden Fußelementen gebildet, die so miteinander verbunden sind, dass sie das Fanglager umgeben. Auf diese Weise wird besonders einfach eine Aufnahme für das Fanglager realisiert.

Nachfolgend wird ein Ausführungsbeispiel der Erfindung anhand der Zeichnung näher erläutert. Es zeigen:
- Fig. 1: eine perspektivische Explosionsansicht einer erfindungsgemäßen Vorrichtung,
- Fig. 2: eine Seitenansicht des Gestells der Vorrichtung gemäß Fig. 1 und
- Fig. 3: eine Draufsicht nach Fig. 2.

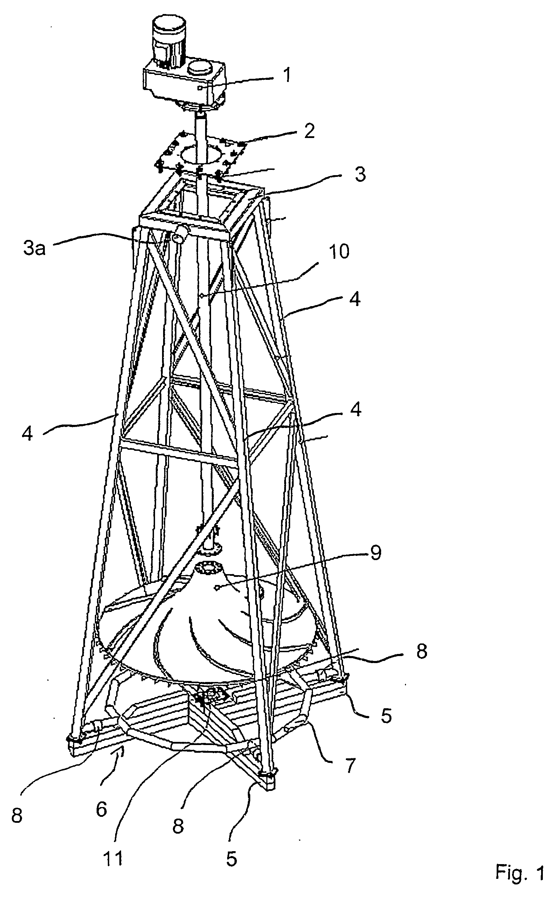

Bei der in den Fig. 1 bis 3 gezeigten Rühr- und Begasungsvorrichtung ist eine Antriebsvorrichtung 1, z.B. ein Elektromotor mit einem Getriebe auf einem turmartigen Gestell befestigt. Das turmartige Gestell weist ein oberhalb des Niveaus eines (hier nicht gezeigten) Belebtschlamms angeordnetes Trägerelement auf, das eine Trägerplatte 2 zur Aufnahme der Antriebsvorrichtung 1 und einen Luftsammelkanal 3 umfasst. Die Trägerplatte 2 ist auf einem vom Luftsammelkanal 3 nach innen vorspringenden umlaufenden Flansch abgestützt. Der Luftsammelkanal 3 ist mit einem Anschlussstutzen 3a versehen. Vom Luftsammelkanal 3 erstrecken sich vier Stützelemente 4, die hier als hohle Vierkantrohre ausgebildet sind. Die Stützelemente 4 sind jeweils auf einem balkenartig ausgebildeten Fußelement 5 eines allgemein mit dem Bezugszeichen 6 bezeichneten Fußes abgestützt. Eine mit 7 bezeichnete Ringleitung ist mit Verbindungsstücken 8 in der Nähe des unteren Endes jedes der Stützelemente 4 an die Ringleitung 7 angeschlossen. Die Ringleitung 7 weist (hier nicht gezeigte) Begasungsöffnungen auf, welche zu einer Unterseite eines hyperbolidartig ausgebildeten Rührelements 9 weisen. Das Rührelement 9 ist mittels einer lotrechten Welle 10 mit der Antriebsvorrichtung 1 verbunden. Das der Antriebsvorrichtung 1 gegenüberliegende über die (hier nicht gezeigte) Unterseite des Rührelements 9 hervorstehende Ende der Welle 10 ist in einem zentral am Fuß 6 angebrachten Fanglager 11 gehalten.

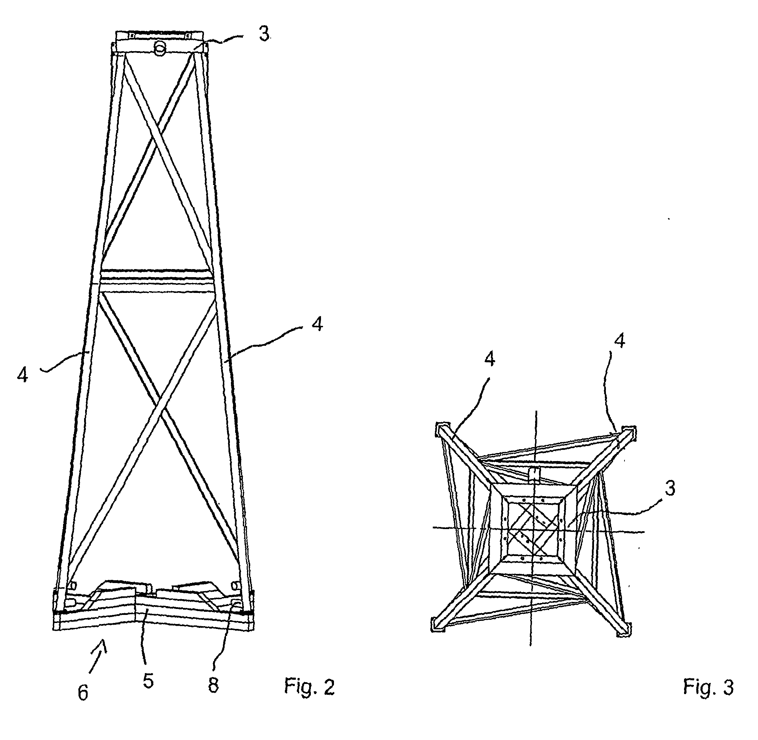

Wie insbesondere aus den Fig. 2 und 3 gut ersichtlich ist, erstrecken sich die Fußelemente 5 jeweils versetzt in Richtung des gegenüberliegenden Stützelements 4. So wird im Zentrum des Fußes 6 eine kastenartige Struktur gebildet, in der das Fanglager 11 aufgenommen werden kann. Die Fußelemente 5 sind zweckmäßigerweise aus Gusseisen hergestellt. Sie können auf einfache Weise montiert werden.

### Die Funktion der Vorrichtung ist folgende:

Eine (hier nicht gezeigte) Druckluftquelle ist über einen Schlauch oder eine Leitung mit dem Anschlussstutzen 3a des Luftsammelkanals 3 verbunden. Die den Luftsammelkanal 3 zugeführte Druckluft gelangt über die hohl ausgebildeten Stützelemente 4 und die in der Nähe des Fußes 6 befindlichen Verbindungsstücke 8 und in die Ringleitung 7. Die Druckluft tritt über in der Ringleitung 7 vorgesehene Begasungsöffnungen bzw. Düsen aus. Das Rührelement 9 verwirbelt die aufsteigende Luft zusammen mit dem Belebtschlamm.

### Bezugszeichenliste

- 1: Antriebsvorrichtung
- 2: Trägerplatte
- 3: Luftsammelkanal
- 3a: Anschlussstutzen
- 4: Stützelement
- 5: Fußelement
- 6: Fuß
- 7: Ringleitung
- 8: Verbindungsstück
- 9: Rührelement
- 10: Welle
- 11: Fanglager

## Patentansprüche

1. Rühr- und Begasungsvorrichtung für Belebtschlämme, bei der ein turmartiges Gestell gebildet ist aus einem eine Antriebsvorrichtung (1) aufnehmenden Trägerelement (2, 3), von dem sich mindestens drei Stützelemente (4) erstrecken, wobei eine Luftzuführung für eine in einer Ebene unterhalb eines über eine Welle (10) mit der Antriebsvorrichtung (1) verbundenen Rührelements (9) befindliche Begasungseinrichtung (7) vorgesehen ist,
**dadurch gekennzeichnet, dass**
die Luftzuführung durch einen in mindestens einem der Stützelemente (4) in Längsrichtung sich erstreckenden leitungsartigen Durchgang erfolgt.

2. Rühr- und Begasungsvorrichtung nach Anspruch 1, wobei das Trägerelement (2, 3) einen mit dem Durchgang verbundenen Luftsammelkanal (3) aufweist.

3. Rühr- und Begasungsvorrichtung nach einem der vorhergehenden Ansprüche, wobei der Luftsammelkanal (3) mit einer Druckluftquelle verbunden ist.

4. Rühr- und Begasungsvorrichtung nach einem der vorhergehenden Ansprüche, wobei die Begasungseinrichtung (7) an einem unteren Ende des Stützelements (4) mit dem Durchgang verbunden ist.

5. Rühr- und Begasungsvorrichtung nach einem der vorhergehenden Ansprüche, wobei sämtliche Stützelemente (4) einen in Längsrichtung sich erstreckenden leitungsartigen Durchgang aufweisen und die Luftzuführung durch sämtliche Durchgänge erfolgt.

6. Rühr- und Begasungsvorrichtung nach einem der vorhergehenden Ansprüche, wobei die Begasungseinrichtung eine, vorzugsweise mit sämtlichen Durchgängen verbundene, mit Begasungsöffnungen versehene Ringleitung (7) ist.

7. Rühr- und Begasungsvorrichtung nach einem der vorhergehenden Ansprüche, wobei die Ringleitung (7) von den Stützelementen (4) umgeben ist

8. Rühr- und Begasungsvorrichtung nach einem der vorhergehenden Ansprüche, wobei die Stützelemente (4) an ihrem unteren Ende mit einem Fuß (6) verbunden sind.

9. Rühr- und Begasungsvorrichtung nach einem der vorhergehenden Ansprüche, wobei die Begasungseinrichtung (7) Bestandteil des Fußes (6) ist und die Durchgänge mit im Fuß (6) vorgesehenen jeweils mindestens eine Begasungsöffnung aufweisenden Begasungsleitungen verbunden sind.

10. Rühr- und Begasungsvorrichtung nach einem der vorhergehenden Ansprüche, wobei der Fuß (6) ein zentral angeordnetes Fanglager (11) für ein von der Unterseite des Rührelements (9) hervorstehendes Ende der Welle (10) aufweist.

11. Rühr- und Begasungsvorrichtung nach einem der vorhergehenden Ansprüche, wobei der Fuß (6) aus von vom unteren Ende der Stützelemente (4) sich erstreckenden Fußelementen (5) gebildet ist, die so miteinander verbunden sind, dass sie das Fanglager (11) umgeben.

## Claims

1. Stirring and aerating device for activated sludges for which a tower-like frame is formed from a carrier element (2, 3) holding a drive device (1), from which element extend at least three support elements (4), wherein an air inlet is provided for an aerating device (7) located at a level below a stirring element (9) connected via a shaft (10) with the drive device (1),
**characterized** thereby that
the air inlet is implemented with a line-like passageway extending in longitudinal direction in at least one of the support elements (4).

2. Stirring and aerating device as defined in claim 1, wherein the carrier element (2, 3) has an air collection canal (3) connected with the passageway.

3. Stirring and aerating device as defined in one of the preceding claims, wherein the air collection canal (3) is connected with a source of compressed air.

4. Stirring and aerating device as defined in one of the preceding claims, wherein the aerating device (7) is connected with the passageway on a lower end of the support element (4).

5. Stirring and aerating device as defined in one of the preceding claims, wherein all support elements (4) have a line-like passageway extending in longitudinal direction and the air inlet takes place through all passageways.

6. Stirring and aerating device as defined in one of the preceding claims, wherein the aerating device is a ring line (7) equipped with aerating openings, preferably connected with all passageways.

7. Stirring and aerating device as defined in one of the preceding claims, wherein the ring line (7) is surrounded by the support elements (4).

8. Stirring and aerating device as defined in one of the preceding claims, wherein the support elements (4) are connected on their lower end with a foot (6).

9. Stirring and aerating device as defined in one of the preceding claims, wherein the aerating device (7) is part of the foot (6) and the passageways are connected with aerating lines having at least one aerating opening each, which aerating lines are located in the foot (6).

10. Stirring and aerating device as defined in one of the preceding claims, wherein the foot (6) has a centrally positioned safety bearing (11) for an end of the shaft (10) protruding from the underside of the stirring element (9).

11. Stirring and aerating device as defined in one of the preceding claims, wherein the foot (6) is formed from foot elements (5) extending from the lower end of the support elements (4) which foot elements are connected together so that they surround the safety bearing (11).

## Revendications

1. Agitateur et fumigateur pour boues activées pour lequel un bâti en forme de tour est constitué d'un élément porteur (2, 3) recevant un dispositif d'entraînement (1) d'où s'avancent au moins trois éléments de support (4), une amenée d'air étant prévue pour un dispositif de fumigation (7) se trouvant dans un plan en aval d'un élément agitateur (9) relié au dispositif d'entraînement (1) par l'intermédiaire d'un arbre (10),
**caractérisé en ce que**
l'amenée d'air est effectuée par un passage en forme de canalisation s'avançant longitudinalement dans au moins un des éléments de support (4).

2. Agitateur et fumigateur selon la revendication 1, l'élément porteur (2, 3) présentant un canal collecteur d'air (3) relié au passage.

3. Agitateur et fumigateur selon l'une des revendications précédentes, le canal collecteur d'air (3) étant relié à une source d'air comprimé.

4. Agitateur et fumigateur selon l'une des revendications précédentes, le dispositif de fumigation (7) étant relié par une extrémité inférieure de l'élément de support (4) au passage.

5. Agitateur et fumigateur selon l'une des revendications précédentes, tous les éléments de support (4) présentant un passage en forme de canalisation s'étendant dans le sens de la longueur et l'amenée d'air étant effectuée par tous les passages.

6. Agitateur et fumigateur selon l'une des revendications précédentes, le dispositif de fumigation étant une canalisation circulaire (7) munie d'orifices de fumigation, de préférence reliée à tous les passages.

7. Agitateur et fumigateur selon l'une des revendications précédentes, la canalisation circulaire (7) étant entourée par les éléments de support (4).

8. Agitateur et fumigateur selon l'une des revendications précédentes, les éléments de support (4) étant reliés à leur extrémité inférieure à un pied (6).

9. Agitateur et fumigateur selon l'une des revendications précédentes, le dispositif de fumigation (7) étant un élément du pied (6) et les passages étant reliés aux canalisations de fumigation prévues dans le pied (6) présentant respectivement au moins un orifice de fumigation.

10. Agitateur et fumigateur selon l'une des revendications précédentes, le pied (6) présentant un palier collecteur (11) disposé centralement pour une extrémité de l'arbre (10) laquelle dépasse de la face inférieure de l'élément agitateur (9).

11. Agitateur et fumigateur selon l'une des revendications précédentes, le pied (6) étant constitué d'éléments de pied (5) s'étendant de l'extrémité inférieure des éléments de support (4), lesquels étant reliés les uns aux autres de façon qu'ils entourent le palier collecteur (11).
